# EUROPÄISCHE PATENTSCHRIFT

(11) **EP 3 066 394 B1**
(45) Veröffentlichungstag und Bekanntmachung des Hinweises auf die Patenterteilung: **26.12.2018**
(21) Anmeldenummer: 14783614.2
(22) Anmeldetag: 10.10.2014
(51) Int. Cl.: F24C 15/16, A21B 3/15

(54) **BACKBLECH SOWIE BACKOFEN MIT BACKBLECH**
BAKING BOARD AND BAKING OVEN WITH BAKING BOARD
MOULE DE CUISSON ET FOUR AVEC MOULE DE CUISSON

(30) Priorität: 04.11.2013 DE 202013104912 U
(43) Veröffentlichungstag der Anmeldung: 14.09.2016
(73) Patentinhaber: Lidl Stiftung & Co. KG, 74167 Neckarsulm (DE)
(72) Erfinder: CICHUTA, Denis, 74206 Bad Wimpfen (DE); KESSEL, Johannes, 74074 Heilbronn (DE)
(74) Vertreter: Weickmann & Weickmann PartmbB
(86) Internationale Anmeldenummer: PCT/EP2014/071734
(87) Internationale Veröffentlichungsnummer: WO 2015/062843

(56) Entgegenhaltungen:
- WO-A1-2005/002342
- WO-A1-2009/123451
- DE-U1-202012 006 971
- DE-U1-202013 004 320
- FR-A- 1 082 017
- FR-A1- 2 288 467

## Beschreibung

### I. Anwendungsgebiet

Die Erfindung betrifft primär ein Backblech, wie es benutzt wird, um zu backende Teiglinge darauf aufzulegen und im Backraum eines Backofens zu backen.

### II. Technischer Hintergrund

Solche Backbleche werden vorzugsweise in Backöfen verwendet, die direkt in den Verkaufsstellen für die Backwaren aufgestellt sind, und in denen die dort angelieferten Teiglinge direkt vor Ort und damit bedarfsgerecht frisch gebacken werden.

Die mit den Teiglingen belegten Backbleche werden dabei von vorne in den Backraum des Backofens eingeschoben, wobei die Backbleche mit ihren Auflagebereichen auf der Unterseite der Randbereiche auf entsprechenden Auflagen des Backofens aufliegen.

Diese Backbleche müssen unterschiedliche Eigenschaften erfüllen, beispielsweise eine sehr gute Wärmeleitung von unten nach oben in die Backwaren hinein gewährleisten, leicht zu reinigen sein, korrosionsfrei sein und bei geringem Gewicht dennoch ausreichend formstabil sein.

Aus den genannten Gründen bestehen derartige Backbleche meist aus Aluminium, und sind im mittleren Bereich, dem Auflagebereich für die Backwaren, gelocht.

Aluminium oder auch einige andere Materialien haben jedoch den Nachteil, dass sie nicht sehr verschleißfest sind, sodass durch das häufige Entlangschieben der Backbleche auf den seitlichen, leistenförmigen Auflagern der Backöfen, die meist aus Stahl sind, ein Abrieb vom Material des Backbleches auftritt, was vermieden werden soll, da ein solcher Abrieb ggf. auf das im Backofen darunter liegende Backblech herabfallen könnte.

Es ist daher bereits bekannt, das Backblech aus einem abriebfesteren Material herzustellen, beispielsweise aus Edelstahl.

Dies hat jedoch den Nachteil, dass ein vollständig aus Edelstahl gefertigtes Backblech zu schwer und zu teuer ist.

Aus diesem Grund wurde in dem DE 202013004320 bereits vorgeschlagen, den Randbereich des aus Aluminium bestehenden Backbleches mit einem Schutzprofil aus einem dünnen Edelstahl-Blech zu ummanteln.

Dies hat jedoch den Nachteil, dass die Ränder des Edelstahlblechs, also der Übergang zum Aluminium hin, sehr scharfkantig ist und für das Bedienungspersonal eine Verletzungsgefahr darstellt. Unter Verschmutzungsgesichtspunkten sind die dadurch entstehenden Absätze auf der Oberseite zwischen Edelstahlblech und dem Basisblech aus Aluminium ebenfalls nachteilig.

Auch aus der FR 1 082 017 A ist ein Backblech bekannt, bei dem ein - sehr dünnes - Basisblech randseitig in einem versteifenden, etwa U-förmigen, Profil steckt. Zu diesem Zweck weist das gesamte Backblech, und damit auch dessen Oberseite, in diesem Randbereich einen Versatz nach oben auf.

Auch die FR 2 288 467 A zeigt ein Backblech, dessen Rand umlaufend von einem formschlüssig angepassten Schutzprofil eingefasst ist.

Das Basisblech weist in seinem äußeren Randbereich eine Absenkung zumindest in seiner Oberseite, in diesem Fall hinsichtlich des gesamten Verlaufes des Querschnittes des Backbleches, auf.

Darüber hinaus ist es aus der WO 2009/123451 A1 bekannt, den Rand eines Basisbleches mit einem etwa U-förmigen Schutzprofil zu umgeben, und dabei dessen oberen Schenkel in einer zur Seite hin frei auslaufenden Absenkung der Oberseite dieser Basisplatte 2 anzuordnen. Dieser obere Schenkel stellt sowohl randseitig als auch an seiner Unterseite einen Abstand zu der Absenkung dar.

### III. Darstellung der Erfindung

### a) Technische Aufgabe

Es ist daher die Aufgabe gemäß der Erfindung, ein Backblech zu schaffen, welches die vorstehenden Nachteile vermeidet.

### b) Lösung der Aufgabe

Diese Aufgabe wird durch die Merkmale der Ansprüche 1 und 13 gelöst. Vorteilhafte Ausführungsformen ergeben sich aus den Unteransprüchen.

Durch die Anordnung einer zum Rand des Basisbleches hin frei auslaufenden Absenkung, die sich entlang des vorzugsweise gesamten Randbereiches auf der Oberseite des Basisbleches erstreckt, wird Platz geschaffen, um den oberen Schenkel des im Querschnitt U-förmigen Schutzprofiles in dieser Absenkung aufzunehmen.

Wenn die Dicke des oberen Schenkels der Tiefe der Absenkung entspricht, fluchtet die Oberseite des darin eingelegten oberen Schenkels mit der Oberseite des Basisbleches im mittleren Bereich, sodass dazwischen kein verletzungsträchtiger und verschmutzungsträchtiger Absatz mehr entsteht.

Wenn der obere Schenkel mit seiner freien Kante an der Schulter, die den Beginn der Absenkung bildet, anliegt, entsteht zwischen der Schulter und der freien Kante des oberen Schenkels auch keine Lücke, in der sich Verschmutzungen ansammeln könnten. Vorzugsweise steht aus diesem Grund die Kante des oberen Schenkels senkrecht zu dessen Hauptebene und ebenso die Schulter der Absenkung im rechten Winkel zu deren Hauptebene.

Der untere Schenkel des Schutzprofiles liegt an dieser Unterseite des Basisbleches an und bildet mit seiner freien Kante gegenüber dieser Unterseite einen Absatz.

Damit diese freie Kante des unteren Schenkels keine Verletzung eines Benutzers bewirken kann, ist diese freie Kante gerundet, indem sie durch eine 180°-Kröpfung des unteren Schenkels des Schutzprofiles, in das Innere des U-förmigen Schutzprofiles hinein, also einen Umschlag des unteren Schenkels, gebildet wird.

Die Materialstärke des Schutzprofiles ist so gering, dass bei der 180°-Kröpfung des unteren Schenkels die beiden Lagen des Materials des Schutzprofiles ohne Abstand direkt aufeinander liegen.

Vorzugsweise befinden sich die freie Kante des oberen Schenkels und die freie Kante des unteren Schenkels genau übereinander.

Die Innenkontur des Schutzprofiles ist an die Außenkontur des Randbereiches des Backbleches angepasst indem er dicht an dieser anliegt:
Wenn der Randbereich des Backbleches sich horizontal nach außen erstreckt, besitzt das Schutzprofil im Querschnitt eine einfache U-Form.

Im Randbereich des Basisbleches kann jedoch auch eine Biegung eingearbeitet sein, sodass der äußere Teil des Randbereiches schräg nach oben ansteigt. Dann besitzt die Innenkontur des U-förmigen Schutzprofiles eine analoge Form, indem oberer und unterer Schenkel entsprechend gekröpft sind.

Denn das Schutzprofil soll selbstverständlich dicht um den Randbereich des Backbleches herum anliegen, um zum einen eine stabile Einheit zu bilden und vor allem um das Eindringen von Schmutz zwischen Schutzprofil und Basisblech zu verhindern.

Die Absenkung im Randbereich kann auf unterschiedliche Art und Weise erzeugt werden:
Wenn die Absenkung in der Oberseite dadurch gebildet wird, dass das Basisblech mit einer durchgehend gleichbleibenden Blechstärke im Randbereich gegenüber dem mittleren Bereich nach unten versetzt wird, entsteht dadurch an der Unterseite des Basisbleches eine zum mittleren Bereich des Backbleches hin weisende Schulter. In dem dann nach unten vorstehenden Randbereich der Unterseite liegt der untere Schenkel des Schutzprofiles an.

Durch eine andere Herstellungsweise kann jedoch auch erreicht werden, dass das Basisblech nicht nur in der Oberseite, sondern auch in der Unterseite, eine Absenkung und damit jeweils eine zum äußeren Rand hin weisende Schulter aufweist. Dann könnte analog zur Oberseite auch in der Absenkung der Unterseite der untere Schenkel des Schutzprofiles Platz finden, mit dem Vorteil, dass dann auch dort kein Absatz zwischen Schutzprofil und Unterseite des Basisbleches mehr entstehen würde.

Die Kröpfung an der Außenkante des unteren Schenkels im Schutzprofil wäre dann ebenfalls nicht unbedingt notwendig, da die freie Kante des Schutzprofiles dann nicht mehr zugänglich, sondern in der Absenkung aufgenommen wäre.

Eine solche gleichzeitige Anbringung von oberer und unterer Aussparung im Basisblech ist gerade bei Aluminium durch einen einfachen Präge- oder Rollvorgang leicht herzustellen, wobei die dadurch eintretende geringe Verbreiterung des Randbereiches vorab berechenbar ist.

Bei der Befestigung des Schutzprofiles am Basisblech muss berücksichtigt werden, dass die Backbleche während des Einsatzes sehr starken Temperaturschwankungen über einen Bereich von mehreren 100°C unterworfen sind, was insbesondere ein Verkleben von Schutzprofil und Basisblech sehr schwierig macht.

Erfindungsgemäß wird deshalb eine formschlüssige Verbindung mittels Prägen vorgeschlagen.

In Verlaufsrichtung beabstandet entlang des Schutzprofiles, welches sich ja entlang der seitlichen Randbereiche des Backbleches erstreckt, sind beabstandet mehrere Einprägungen von unten in den unteren Schenkel des Schutzprofiles hinein vorgenommen, deren Tiefe mindestens der Wanddicke des Schutzprofiles, besser einem Mehrfachen hiervon, entspricht. Dadurch setzt sich die Einprägung, die im auf den Randbereich aufgesetzten Zustand des Schutzprofiles durchgeführt wird, durch das Basisblech hindurch fort bis in den oberen Schenkel des Schutzprofiles, der dadurch an seiner Oberseite eine Ausprägung nach oben erhält, zumindest wenn beim Prägen ein entsprechender Gegenhalter an der Oberseite des Oberschenkels anliegt.

Durch diese sich durch alle Schichten - unterer Schenkel des Schutzprofiles, Basisblech und oberer Schenkel des Schutzprofiles - hindurch fortsetzende Prägung wird eine formschlüssige Verbindung erreicht, die das Schutzprofil in beide Richtungen der Hauptebene des Backbleches ausreichend sichert.

Die Einprägungen und Ausprägungen sind möglichst nahe an der freien Kante der oberen und unteren Schenkel des Schutzprofiles, die sich vorzugsweise direkt übereinander befinden, angeordnet, um ein Hochstehen dieser freien Kanten zu vermeiden. Sofern der Randbereich des Basisbleches die zuvor beschriebene Biegung aufweist, befinden sich die Prägungen von der Biegung nach innen versetzt zum mittleren Bereich des Basisbleches hin.

Dabei wird die Einprägung so durchgeführt, dass die auf der Oberseite des Oberschenkels sich ergebende Ausprägung einen sanften Übergang zwischen der glatten Oberseite und der Ausprägung ergibt, insbesondere der Winkel am Übergang von der Ausprägung in die glatte Oberseite größer als 120°, besser größer als 130° ist.

Durch diesen flachen Übergang wird sichergestellt, dass sich in dem Übergang keine Verschmutzungen anlagern können.

Aus dem gleichen Grund ist auch die Anordnung der Einprägung an der Unterseite und der Ausprägung an der Oberseite statt umgekehrt gewählt, da Verschmutzungen, dann von den Teiglingen, sich eher an der Oberseite als an der Unterseite anlagern können, jedoch ein Anlagern an Ausprägungen weniger leicht möglich ist als in Einprägungen.

In der Aufsicht auf das Backblech betrachtet sind die Ecken des Backblechs abgeschrägt, und zwar so stark, dass das Schutzprofil mit seiner in der Aufsicht betrachteten Breite vollständig innerhalb der Abschrägung liegt. Das Schutzprofil wird dabei vorzugsweise über die im Wesentlichen ganze seitliche Erstreckungslänge des Basisbleches geführt, endet jedoch am Beginn der Abschrägung.

Das Backblech kann einschließlich des Schutzprofiles, insbesondere auf der Oberseite und auf der Unterseite, mit einer Schutzbeschichtung beschichtet sein, beispielsweise mit Teflon, welches gegenüber den aufzulegenden Teiglingen eine geringe Haftreibung besitzt.

Vorzugsweise ist die Unterseite des unteren Schenkels des Schutzprofiles, insbesondere das ganze Schutzprofil, jedoch nicht mit dieser Schutzbeschichtung abgedeckt.

Bei dem Backofen, in dem die beschriebenen Backbleche verwendet werden sollen, sind die seitlichen, leistenförmigen Auflager so positioniert und gestaltet, dass die Backbleche mit der Unterseite des Unterschenkels ihres Schutzprofiles auf den Auflagern aufliegen, wenn die Backbleche in den Backofen geschoben werden.

### c) Ausführungsbeispiele

Ausführungsformen gemäß der Erfindung sind im Folgenden beispielhaft näher beschrieben. Es zeigen:
- Fig. 1:: Ein Backblech mit Schutzprofilen in der Aufsicht,
- Fig. 2a:: eine erste Ausführungsform in Schnittdarstellung,
- Fig. 2b:: eine zweite Ausführungsform in Schnittdarstellung,
- Fig. 3:: einen Backofen in Frontansicht.

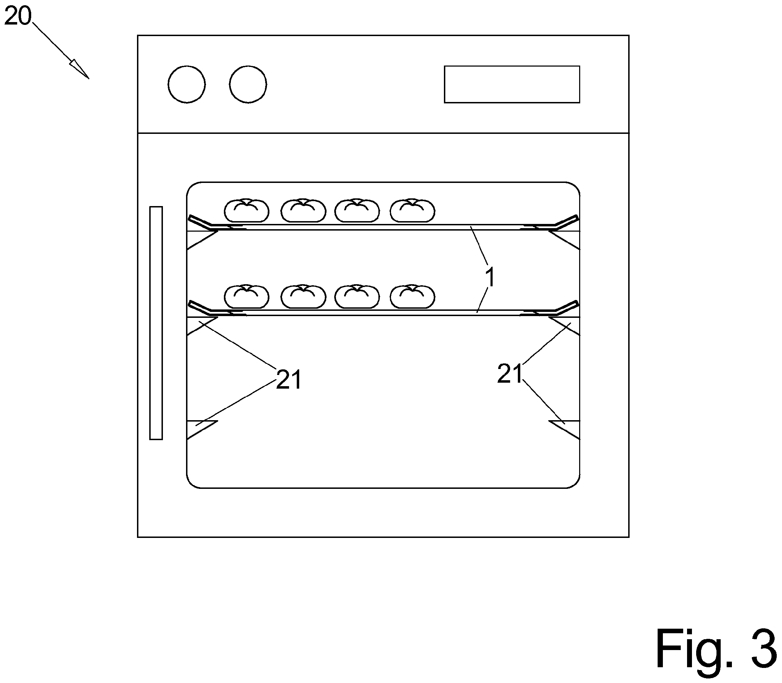

Aus **Fig. 3** wird die Problemstellung klar:
Fig. 3 zeigt einen Backofen 20, wie er häufig in Verkaufsstellen für Backwaren eingesetzt wird, in der Frontansicht:

Durch die mit einer Glasscheibe ausgestattete Fronttür sind im Backraum die seitlichen, in die Tiefe des Backofens reichenden, leistenförmigen Auflagern 21 zu erkennen, auf denen die Backbleche 1 mit darauf liegenden Teiglingen zum Backen eingeschoben werden.

Durch das Entlangschieben der Unterseite der Backbleche 1 mit ihren Randbereichen auf den Oberseiten der Auflagern 21 entsteht am weicheren Material Abrieb. Sofern die Backbleche 1 aus beispielsweise Aluminium bestehen, die Auflager 21 dagegen aus Stahl oder Eisen, wird der Abrieb an dem Backblech 1 entstehen und könnte dann den Backofen 20 verschmutzen und sogar auf das Backblech und die Teiglinge einer tieferen Ebene im Backofen 20 herabfallen und diese verschmutzen.

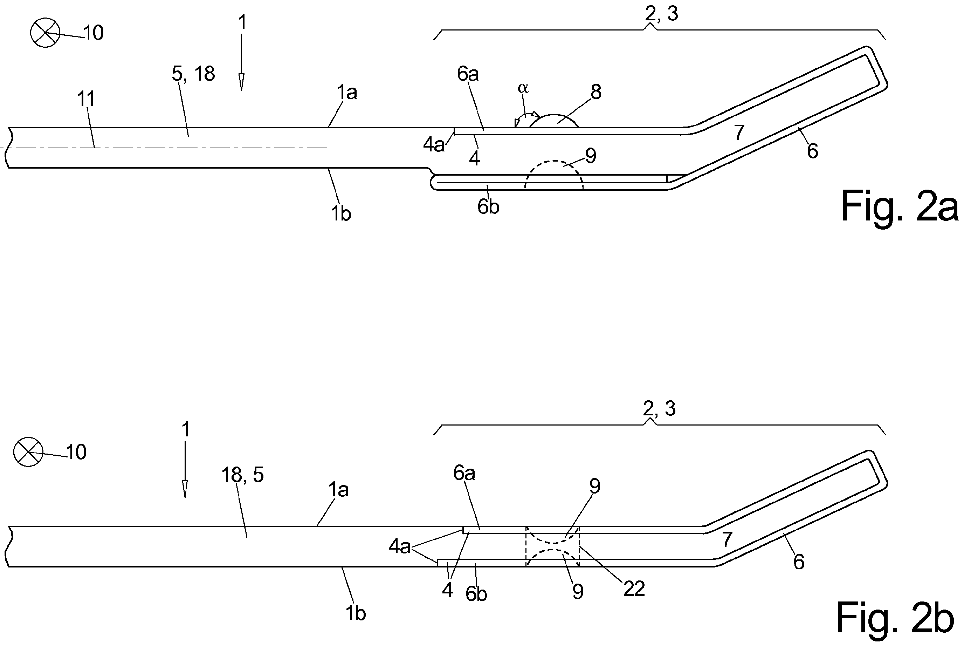

Um dies zu vermeiden, ist auf die beiden seitlichen Randbereiche 2,3 des Basisbleches 18 des Backbleches 1 ein Schutzprofil 6 aufgebracht, wie vergrößert in einem Teilschnitt für einen Randbereich 2, 3 anhand der **Figuren 2a und 2b** dargestellt:
Bei beiden Figuren ist erkennbar, dass das im Wesentlichen U-förmige Schutzprofil 6 dicht um die Kontur des Randbereiches 2, 3 des Basisbleches 18 herum anliegt. Der Randbereich 2, 3 weist im Schnitt betrachtet eine Biegung 7 auf, von der ab der Randbereich 2 nach außen hin ansteigt, und das Schutzprofil 6 folgt natürlich dieser Formgebung. Dabei ist die Biegung 7 für die vorliegende Erfindung nicht notwendig, sondern der Randbereich 2, 3 könnte auch eben nach außen weitergeführt sein.

Wesentlich für die Erfindung ist dagegen, dass im Randbereich 2, 3 in der Oberseite 1a des Basisbleches 18 eine Absenkung 4 vorhanden ist, die sich vom ebenen mittleren Bereich des Basisbleches 18 über dessen Biegung 7 hinweg bis zum freien Rand des Basisbleches 18 erstreckt.

In dieser Absenkung 4 liegt der obere Schenkel 6a des U-förmigen Schutzprofiles 6, und da dieser obere Schenkel 6a genauso dick ist wie die Tiefe der Absenkung 4, liegen die Oberseite 1a des Basisbleches 18 im mittleren Bereich und die Oberseite des oberen Schenkels 6a fluchtend auf einer Ebene.

Da der obere Schenkel 6a mit seiner freien Endkante die Schulter 4a am Beginn der Absenkung 4 erreicht, entsteht zwischen beiden auch keine Lücke, in der sich Verschmutzungen ansammeln könnten.

In **Fig. 2a** ist die Absenkung 4 in der Regel nachträglich hergestellt worden: In dem eine durchgehend gleiche Materialdicke im mittleren Bereich 5 als auch in den Randbereichen 2, 3 aufweisenden Basisblech 18 wird der Randbereich 2, 3 gegenüber dem mittleren Bereich 5 nach unten versetzt durch einen Umformvorgang.

Deshalb liegt die Unterseite 1b des Basisbleches 18 im Randbereich 2 tiefer als im mittleren Bereich 5.

Der untere Schenkel 6b des U-förmigen Schutzprofiles 6 liegt an dem tiefer liegenden Randbereich 2, 3 der Unterseite 1b des Basisbleches 18 an und erreicht annähernd den Absatz in der Unterseite 1b des Basisbleches 18.

Die freie Kante des unteren Schenkels 6b des Profiles 6 ist gerundet, um Verletzungen zu vermeiden, was dadurch erzielt wird, dass das Material des unteren Schenkels 6b einmal um 180° gekröpft ist, und zwar mit dem freien Ende ins Innere des U-förmigen Profiles 6 hinein umgeschlagen ist. Das freie Ende des Materials des unteren Schenkels 6b reicht etwa bis zur Biegung 7.

Wenn keine Biegung 7 vorhanden wäre, würde es bis zum verbindenden Schenkel des U-förmigen Schutzprofiles 6 reichen.

Die alternative Lösung der **Fig. 2b** unterscheidet sich von derjenigen der Fig. 2a dadurch, dass eine zum Rand hin offene Absenkung 4 nicht nur in der Oberseite 1a sondern auch in der Unterseite 1b des Basisbleches 18 vorhanden ist.

Dadurch ist die Materialdicke des Basisbleches 18 im Randbereich 2 geringer als im mittleren Bereich 5.

Der Vorteil liegt jedoch darin, dass der untere Schenkel 6b des Profiles 6 ebenso in der unteren Absenkung 4aufgenommen werden kann wie der obere Schenkel 6a in der oberen Absenkung 4, so dass weder an der Oberseite 1a noch an der Unterseite 1b ein Absatz zum mittleren Bereich 5 entsteht.

Auch auf die 180°-Kröpfung an der freien Kante des unteren Schenkels 6b kann dann verzichtet werden, denn die relativ scharfe Schneid- oder Stanzkante am freien Ende der Schenkel 6a, 6b liegt geschützt an der jeweiligen Schulter am Beginn der Absenkung 4 an.

Auch hinsichtlich der Befestigung des Schutzprofiles 6 an dem Randbereich 2, 3 des Basisbleches 18 zeigen die Figuren 2a und 2b unterschiedliche Lösungen, die wahlweise einsetzbar sind:
In **Fig. 2a** ist von der Unterseite her in den unteren Schenkel 6b des Schutzprofiles 6, und zwar von der Biegung 7 zum mittleren Bereich 5 hin versetzt, eine Einprägung 9 vorgenommen, die tiefer ist als die Materialstärke des Schutzprofiles 6 und die sich dadurch durch das Basisbleches 18 hindurch bis in den oberen Schenkel 6a des Schutzprofiles 6 fortsetzt, aus dessen Oberseite sich dadurch eine Ausprägung 8 nach oben bildet.

Die Einprägung 9 ist auf der Unterseite gewählt, da dort das Ansammeln von Verschmutzungen in der Einprägung 9 kaum zu befürchten steht.

Die Einprägung 9 wird dabei so geformt und eingebracht, dass die Ausprägung 8 auf der Oberseite mit einem Winkel von mindestens 120°, besser 130°, in die ebene Oberseite 1a übergeht, also sich dort keine scharfe Kante bildet, in der sich eine Verschmutzung anlagern könnte.

Will man diese Ausprägung 8 nach oben vermeiden, bietet sich eine Lösung gemäß **Fig. 2b** an:
Dort ist sowohl im oberen Schenkel 6a als auch im unteren Schenkel 6b einander gegenüberliegend jeweils eine Einprägung 9 im Schutzprofil 6 angeordnet, und im Randbereich des Basisbleches 18 dazwischen ist in diesem eine Durchgangsbohrung 22 mit entsprechendem Durchmesser gebohrt oder ausgestanzt, so dass die Einprägung 9 des Materials des Schutzprofiles 6 sich in diese Durchgangsbohrung 22 hinein ausdehnen kann.

Es bilden sich dann natürlich sowohl auf der Oberseite als auch auf der Unterseite Vertiefungen in der Außenfläche des Schutzprofiles 6 in Form der Einprägungen 9.

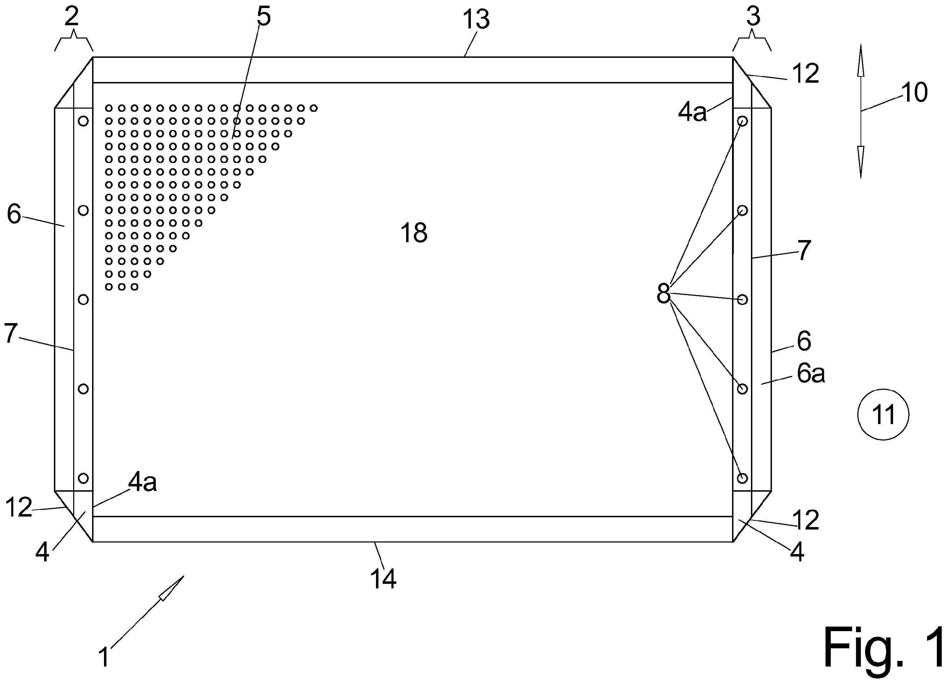

**Figur 1** **zeigt** eine Aufsicht auf das Backblech 1 von oben:
Im gesamten mittleren Bereich 5, in dem die Teiglinge auf das Backblech 1 aufgelegt werden, ist das in der Regel aus Aluminium bestehende Basisblech 18 gelocht, wie nur in der linken oberen Ecke angedeutet.

Entlang der linken und rechten Seitenkante ist im Randbereich 2, 3 das am Basisblech 18 befestigte Schutzprofil 6 zu erkennen, welches mittels der von oben sichtbaren Ausprägungen 8 am Basisblech 18 befestigt ist. Im Bereich des Schutzprofiles 6 ist auch die Biegung 7 zu erkennen.

Im Bereich der Vorderkante 14 und Rückkante 13 ist das Basisblech 18 nach unten umgebördelt, um hier eine gerundete Kante zu schaffen.

Im Bereich der Ecken ist das Basisblech 18 mit einer Abschrägung 12 versehen, die so gewählt ist, dass sich die Breite der Absenkung 4, in der der obere Schenkel 6a des Schutzprofiles 6 aufgenommen ist, vollständig im Bereich der Abschrägung 12 befindet.

### BEZUGSZEICHENLISTE

- 1: Backblech
- 1a: Oberseite
- 1b: Unterseite
- 2: Randbereich
- 3: Randbereich
- 4: Absenkung
- 4a: Schulter
- 5: mittlerer Bereich
- 6: Schutzprofil
- 6a: oberer Schenkel
- 6b: unterer Schenkel
- 7: Biegung
- 8: Ausprägung
- 9: Einprägung
- 10: Erstreckungsrichtung
- 11: Hauptebene
- 12: Abschrägung
- 13: Front kannte
- 14: Rückkante
- 15a, b: freie Kante
- 16: Kröpfung
- 17: Durchgangsbohrung
- 18: Basisblech

- 20: Backofen
- 21: Auflager
- 22: Durchgangsbohrung

## Patentansprüche

1. Backblech (1) mit
- einem Basisblech (18),
- wenigstens einem Auflagebereich an der Unterseite (1b) des Backbleches (1),
- einem U-förmigen Schutzprofil (6), das am Basisblech (18) befestigt ist und einen oberen Schenkel (6a) und einem unteren Schenkel (6b) aufweist und sich entlang der seitlichen Randbereiche um den Randbereich (2, 3)des Basisbleches (18) herum erstreckt,
**dadurch gekennzeichnet, dass**
- die Oberseite (1a) des Basisbleches (18) im Randbereich (2, 3) eine zum Rand hin frei auslaufende Absenkung (4) aufweist,
- der obere Schenkel (6a) des Schutzprofiles (6) in der Absenkung (4) angeordnet und befestigt ist

2. Backblech nach Anspruch 1,
**dadurch gekennzeichnet, dass**
der obere Schenkel (6a) mit seiner freien Kante an der Schulter (4a), die den Beginn der Absenkung (4) bildet, anliegt.

3. Backblech nach einem der vorhergehenden Ansprüche,
**dadurch gekennzeichnet, dass**
die Oberseite des oberen Schenkels (6a) mit der Oberseite (1a) des Basisbleches (18) außerhalb der Absenkung (4) fluchtet.

4. Backblech nach einem der vorhergehenden Ansprüche,
**dadurch gekennzeichnet, dass**
die freie Kante des unteren Schenkels (6b) durch eine mindestens einfache Kröpfung des unteren Schenkels (6b) des Schutzprofiles um 180°, also ins Innere des U-förmigen Schutzprofiles (6) hinein, gebildet wird.

5. Backblech nach einem der vorhergehenden Ansprüche,
**dadurch gekennzeichnet, dass**
die Absenkung (4) in der Oberseite (1a) gebildet wird durch einen Versatz der gleichbleibenden Blechstärke des Basisbleches (18) im Randbereich (2, 3) nach unten.

6. Backblech nach einem der vorhergehenden Ansprüche,
**dadurch gekennzeichnet, dass**
die Absenkung (4) in der Oberseite (1a) des Basisbleches (18) gebildet wird durch eine Einprägung in der Oberseite des Basisbleches (18) und insbesondere im Randbereich (2, 3) in der Unterseite (1b) des Basisbleches (18) eine Absenkung (4') vorhanden ist, in der der untere Schenkel (6b) des Schutzprofiles (6) liegt.

7. Backblech nach einem der vorhergehenden Ansprüche,
**dadurch gekennzeichnet, dass**
das Backblech (1) einschließlich des Schutzprofiles (6), insbesondere auf der Oberseite und auf der Unterseite, mit einer Schutzbeschichtung, insbesondere aus Teflon, beschichtet ist.

8. Backblech nach einem der vorhergehenden Ansprüche,
**dadurch gekennzeichnet, dass**
das Schutzprofil (6) am Basisbleches (18) mittels mehrerer, in Erstreckungsrichtung (10) des Schutzprofiles (6) beabstandeter, Einprägungen (9) befestigt ist, die sich durch das Basisbleches (18) hindurch bis in den oberen Schenkel (6a) des Schutzprofiles (6) als Ausprägungen (8) fortsetzen.

9. Backblech nach einem der vorhergehenden Ansprüche,
**dadurch gekennzeichnet, dass**
der Randbereich (2, 3) des Backbleches (1) eine Biegung (7) mit dem freien Rand nach oben weisend aufweist.

10. Backblech nach einem der vorhergehenden Ansprüche,
**dadurch gekennzeichnet, dass**
die Ecken des Basisbleches (18) abgeschrägt sind und das Schutzprofil (6) am Beginn der Abschrägung (12) endet.

11. Backblech nach einem der Ansprüche 8 - 10,
**dadurch gekennzeichnet, dass**
die Ausprägung (8) eine konvexe Querschnittskontur besitzt, deren Winkel am Übergang zur Oberseite (1a) des Backbleches größer als 120°, besser größer als 130° ist.

12. Backblech nach einem der Ansprüche 8 - 11,
**dadurch gekennzeichnet, dass**
die Einprägungen (9) und Ausprägungen (8) von der Biegung (7) zum mittleren Bereich des Schutzprofiles (6) hin versetzt angeordnet sind.

13. Backofen (20) mit mindestens einem Backblech (1) und mit Auflagern (21) im Backraum des Backofens für das mindestens eine Backblech (1) wobei
die Auflager (21) so beabstandet und positioniert sind, dass das mindestens eine darauf aufgelegte Backblech (1) mit dem Unterschenkel (6b) seines Schutzprofiles (6) auf den Auflagern (21) aufliegt,
**dadurch gekennzeichnet, dass**
das Backblech ein Backblech gemäß einem der vorhergehenden Ansprüche ist.

## Claims

1. A baking sheet (1) comprising:
- a base sheet (18),
- at least one contact portion at a bottom side (1b) of the baking sheet (1);
- a U-shaped protective profile (6) that is attached at the base sheet (18) and includes an upper arm (6a) and a lower arm (6b) and extends along lateral edge portions about an edge portion (2, 3) of the base sheet (18),
**characterized in that**
- a top side (1a) of the base sheet (18) includes a depression (4) in the edge portion (2, 3) wherein the lower portion terminates freely at an edge,
- the upper arm (6a) of the protective profile (6) is arranged and attached in the depression (4).

2. The baking sheet according to claim 1,
**characterized in that**
the upper arm (6a) contacts a shoulder (4a) that forms a beginning of the depression (4) with a free edge of the upper arm (6a).

3. The baking sheet according to one of the preceding claims,
**characterized in that**
a top side of the upper arm (6a) is aligned with a top side (1a) of the base sheet (18) outside of the depression (4).

4. The baking sheet according to one of the preceding claims, **characterized in that**
the free edge of the lower arm (6b) is formed by an at least singular bend of the lower arm (6b), wherein the shoulder is turned by 180 º thus into an interior of the U-shaped protective profile.

5. The baking sheet according to one of the preceding claims,
**characterized in that**
the depression (4) in the top side (1a) is formed by a downward offset of a uniform sheet metal thickness of the base sheet (18) in the edge portion (2, 3).

6. The baking sheet according to one of the preceding claims,
**characterized in that**
the depression (4) in the top side (1a) of the base sheet (18) is formed by an embossing in the top side of the base sheet (18) and in particular in the edge portion (2,3) in the bottom side (1b) of the base sheet (18) a depression (4) is provided in which the lower arm (6b) of the protective profile (6) is arranged.

7. The baking sheet (1) according to one of the preceding claims,
**characterized in that**
the baking sheet (1) including the protective profile (6) is coated with a protective coating in particular made from Teflon® in particular on the top side and on the bottom side.

8. A baking sheet (1) according to one of the preceding claims,
**characterized in that**
the protective profile (6) is attached at the base sheet (11) by plural embossing's that are offset in an extension orientation (10) of the protective profile (6) wherein the embossing's continue through the base sheet (18) into the upper arm (6a) of the protective profile (6) as embossing's (8).

9. The baking sheet according one of the preceding claims,
**characterized in that**
the edge portion (2, 3) of the baking sheet (11) has a fold (7) that is oriented upward with a free edge.

10. The baking sheet according to one of the preceding claims,
**characterized in that**
corners of the base sheet (18) are beveled and the protective profile (6) terminates at a beginning of a bevel (12).

11. The baking sheet according to one of the claims 8-10,
**characterized in that**
the embossing (8) has a convex cross sectional contour with an angle at a transition to the top side (1a) of the baking sheet which is greater than 120º advantageously greater than 130°.

12. The baking sheet according to one of the claims 8 - 11,
**characterized in that**
the concave embossing's (9) and the convex embossing (8) are arranged offset from the fold (7) towards a center portion of the protective profile (6).

13. A baking oven with a least one baking sheet (1) and supports (21) in a baking cavity of the baking oven for the at least one baking sheet (1),
wherein the supports (21) are offset and positioned so that the at least one baking sheet (1) placed onto the supports rests with the lower arm (6b) of its protective profile (6) on the supports (21),
**characterized in that**
the baking sheet is a baking sheet according to one of the preceding claims.

## Revendications

1. Plaque de cuisson (1) avec
- une plaque de base (18),
- au moins une région d'appui sur la face inférieure (1b) de la plaque de cuisson (1),
- un profilé de protection en forme de U (6) attaché à la plaque de base (18) et comprenant une branche supérieure (6a) et une branche inférieure (6b) et s'étendant le long des régions de bord latérales autour de la région de bord latérale (2, 3) de la plaque de base (18),
**caractérisé en ce que**
- la face supérieure (1a) de la plaque de base (18) comprend dans la région de bord (2, 3) un enfoncement (4) en terminaison libre vers le bord,
- la branche supérieure (6a) du profilé de protection (6) est arrangée et attachée dans l'enfoncement (4).

2. Plaque de cuisson selon la revendication 1,
**caractérisé en ce que** la branche supérieure (6a) est, avec son bord libre, en appui contre l'épaulement (4a) qui forme le début de l'enfoncement (4).

3. Plaque de cuisson selon une des revendications précédentes,
**caractérisé en ce que**
la face supérieure de la branche supérieure (6a) est alignée avec la face supérieure (1a) de la plaque de base (18) en dehors de l'enfoncement (4).

4. Plaque de cuisson selon une des revendications précédentes,
**caractérisé en ce que**
le bord libre de la branche inférieure (6b) est formé par au moins un coude de 180° de la branche inférieure (6b) du profilé de protection, c'est-à-dire vers l'intérieur du profilé de protection en forme de U (6).

5. Plaque de cuisson selon une des revendications précédentes,
**caractérisé en ce que**
l'enfoncement (4) est formé dans la face supérieure (1a) par un désalignement de l'épaisseur de tôle de la plaque de base (18) dans la région de bord (2, 3) vers le bas.

6. Plaque de cuisson selon une des revendications précédentes,
**caractérisé en ce que**
l'enfoncement (4) est formé dans la face supérieure (1a) de la plaque de base (18) par une empreinte dans la face supérieure de la plaque de base (18), et **en ce qu'**il y a en particulier dans la région de bord (2, 3) dans la face inférieure (1b) de la plaque de base (18) un enfoncement (4') dans laquelle la branche inférieure (6b) du profilé de protection (6) est située.

7. Plaque de cuisson selon une des revendications précédentes,
**caractérisé en ce que**
la plaque de cuisson (1), y compris le profilé de protection (6) est en particulier sur la face supérieure et la face inférieure couverte par un revêtement protecteur, en particulier en téflon.

8. Plaque de cuisson selon une des revendications précédentes,
**caractérisé en ce que**
le profilé de protection (6) est attache à la plaque de base (18) au moyen de plusieurs empreintes (9) espacées dans le sens de l'extension (10) du profilé de protection (6) qui continuent à travers la plaque de base (18) jusque dans la branche supérieure (6a) du profilé de protection (6) en tant que saillies (8).

9. Plaque de cuisson selon une des revendications précédentes,
**caractérisé en ce que**
la région de bord (2, 3) de la plaque de cuisson (1) comprend une courbure (7) avec le bord libre orienté vers le haut.

10. Plaque de cuisson selon une des revendications précédentes,
**caractérisé en ce que**
les coins de la plaque de base (18) sont biseautés et le profilé de protection (6) se termine au début du biseautage (12).

11. Plaque de cuisson selon une des revendications 8-10,
**caractérisé en ce que**
la saillie (8) possède un contour en coupe transversale convexe, dont l'angle à la transition vers la face supérieure (1a) de la plaque de cuisson est supérieur à 120°, mieux encore supérieur à 130°.

12. Plaque de cuisson selon une des revendications 8-11,
**caractérisé en ce que**
les empreintes (9) et les saillies (8) sont arrangées de manière désalignée de la courbature (7) vers la région moyenne du profilé de protection (6).

13. Four (20) avec au moins une plaque de cuisson (1) et avec des supports (21) dans la chambre de cuisson du four pour ladite au moins une plaque de cuisson (1),
les supports (21) étant espacés et positionnés de sorte que ladite au moins une plaque de cuisson (1) est en contact avec les supports (21) sur lesquels il repose par la branche inférieure (6b) de son profilé de protection (6),
**caractérisé en ce que**
la plaque de cuisson est une plaque de cuisson selon une des revendications précédentes.
